# EUROPÄISCHE PATENTSCHRIFT

(11) **EP 0 442 942 B1**
(45) Veröffentlichungstag und Bekanntmachung des Hinweises auf die Patenterteilung: **02.06.1993**
(21) Anmeldenummer: 89912870.6
(22) Anmeldetag: 03.11.1989
(51) Int. Cl.: B01L 7/00, G05D 23/19

(54) **GERÄT ZUM WAHLWEISEN EINSTELLEN DER TEMPERATUR EINER PROBE AUF VERSCHIEDENE WERTE**
APPARATUS FOR SELECTIVELY ADJUSTING THE TEMPERATURE OF A TEST SPECIMEN TO VARIOUS VALUES
APPAREIL POUR REGLER LA TEMPERATURE D'UN ECHANTILLON SUR PLUSIEURS VALEURS

(30) Priorität: 03.11.1988 DE 8813773 U
(43) Veröffentlichungstag der Anmeldung: 28.08.1991
(73) Patentinhaber: Max-Planck-Gesellschaft zur Förderung der Wissenschaften e.V., D-37073 Göttingen (DE)
(72) Erfinder: EIGEN, Manfred, D-3400 Göttingen (DE); OTTEN, Hajo, D-7300 Esslingen (DE)
(74) Vertreter: Witte, Alexander, Dr.-Ing.
(86) Internationale Anmeldenummer: EP8901320
(87) Internationale Veröffentlichungsnummer: WO9005023

(56) Entgegenhaltungen:
- EP-A- 0 122 772
- FR-A- 2 073 836
- GB-A- 2 134 730
- US-A- 3 684 452

## Beschreibung

Die Erfindung betrifft ein Gerät zum Einstellen der Temperatur zumindest einer Probe auf verschiedene Werte, mit einem Halter zur Aufnahme der Probe, mit auf zumindest zwei unterschiedliche Temperaturen thermostatisierten Temperiermittelm, mit einer Transporteinrichtung für den Halter und mit einer Steuerung für die Transporteinrichtung, wobei die Probe mit den Temperiermitteln wahlweise in wärmeleitenden Kontakt bringbar ist.

Ein Gerät der vorstehend genannten Art ist aus der EP-A-O 122 772 bekannt.

Viele biochemische Methoden erfordern ein schnelles und reproduzierbares Ändern der Temperatur ("Umtemperieren") von Lösungen, z. B. beim Hitzedenaturieren von Nucleinsäuren, dem Vorernitzen (Annealing) von Primern, Starten und Stoppen von enzymatischen Reaktionen und dergleichen. Für solche Reaktionen muß auch oft ein bestimmtes Temperaturprofil, das aus mehreren Aufheizungen oder Abkühlungen bestehen kann, zyklisch durchlaufen werden. Die Versuchsdauer kann dabei bis zu einigen Stunden betragen. Ähnliche Aufgaben treten auch in anderen Gebieten der Wissenschaft und Technik auf.

Es ist wünschenswert, solche Prozesse zu automatisieren, um das Personal zu entlasten und um reproduzierbare Bedingungen zu gewährleisten.

Es sind Geräte bekannt, die einen Metallblock enthalten, der Bohrungen oder Ausnehmungen zur Aufnahme von Reaktionsgefäßen aus Kunststoff enthält und dessen Temperatur auf gewünschte Werte einstellbar ist. Die Reaktionsgefäße werden durch Wärmekontakt mit den Bohrungswänden thermostatisiert; der Kontakt kann durch Füllen der Bohrungen mit Wasser oder Öl verbessert werden. Das Temperieren des Metallblockes erfolgt z. B. mittels Heizpatronen, die gegen eine ständig laufende Wasser- oder Konvektionskühlung geregelt werden. Eine andere Möglichkeit ist die Verwendung von Peltierelementen zum Heizen und Kühlen des Metallblockes. Es ist weiterhin bekannt, zum Thermostatisieren des Metallblockes verschiedene, auf unterschiedlichen Temperaturen befindliche Thermostatbäder zu verwenden, die über ein Ventilsystem wahlweise mit Fluidkanälen im Metallblock verbunden werden können.

Wegen der großen Wärmekapazität des Metallblockes und des mit ihm in Verbindung stehenden Systems ist bei solchen Apparaturen ein schneller Temperaturwechsel schwierig zu erreichen.

In der eingangs genannten EP-A-0 122 772 ist ein chemischer Manipulator beschrieben, der automatisch eine Reihe von Misch-, Trenn-, Heiz- und Kühlschritten durchführen kann. Das Gerät weist zu diesem Zweck eine Trennzentrifuge, vier nach oben offene Thermostatbäder, eine Trocknungseinrichtung, eine Zugabestation für Lösungen, eine Mischstation und eine Transporteinrichtung auf. Die Transporteinrichtung umfaßt einen in allen drei Raumrichtungen verfahrbaren Roboterarm, der von einer Steuerung angesteuert wird.

Die zu untersuchenden Proben sind in Plastik-Reaktionsgefäßen aufgenommen, die wiederum zu viert in einen kastenförmigen Halter einsetzbar sind. Bei dem bekannten Gerät sind eine Anzahl solcher Halter vorgesehen, die der Roboterarm nach Maßgabe der Steuerung zu den unterschiedlichen Bearbeitungsstationen transportiert. Zum Erhitzen oder Abkühlen der Proben werden die Halter in das gewünschte Thermostatbad gehängt, das eine entsprechende Einrichtung zur Aufnahme der Halter aufweist.

Bei diesem Gerät ist nur ein langsamer Temperaturwechsel in den Proben zu erzielen, da der Roboterarm eine mehrachsige und damit langsame Bewegung durchführen muß, um den Halter aus einem Thermostatbad zu entnehmen und in ein anderes Thermostatbad einzuhängen. Die Zeit zwischen dem Entnehmen des Halters und dem Eintauchen in das nächste Thermostatbad ist damit viel zu lang, als daß beispielsweise enzymatische Reaktionen in der erforderlichen Zeit von wenigen Sekunden gestoppt werden könnten.

Bei dem bekannten Gerät ist es weiterhin von Nachteil, daß die Proben während des Transportes zwischen zwei Thermostatbädern in Wärmeaustauschkontakt mit der umgebenden Luft sind. Sollen die Proben beispielsweise von 70°C auf 90°C aufgeheizt werden, wie es bei vielen enzymatischen Reaktionen zyklisch erforderlich ist, so werden die 70°C heißen Proben während des Transportes durch die Luft zunächst stark abgekühlt. Hierdurch wird die Ausbeute der Reaktion negativ beeinflußt.

Wegen der offenen Thermostatbäder gibt es außerdem Probleme durch Verspritzen oder Abtropfen der Badflüssigkeit.

Aus der DE-OS-2 063 607 ist ein Rüttler zum Kultivieren von Mikroorganismen bekannt, bei dem ein Aluminiumblock in schwingende Bewegung versetzt wird. Der Aluminiumblock wird an seinem einen Ende geheizt und an seinem anderen Ende gekühlt, so daß sich längs des Blockes ein Temperaturgefälle aufbaut. Der Block weist ferner parallel zu seiner Längsrichtung also in Richtung des Temperaturgefälles verlaufende Nuten sowie mehrere Bohrungen auf. Bei dem bekannten Gerät soll sich das Temperaturgefälle in dem Aluminiumblock bereits nach kurzer Zeit eingestellt haben, so daß ein breiter und kontinuierlicher Temperaturbereich für das Kultivieren der Mikroorganismen bereitgestellt ist.

Die Nuten und Bohrungen dienen zur Aufnahme von Petri-Schalen aus Stahl oder von Glas-Kolben, in denen sich die zu züchtenden Mikroorganismen befinden. Die Petri-Schalen oder Glas-Kolben können an der Stelle in die nuten oder Bohrungen eingesetzt werden, die die für die jeweilige Züchtung erforderliche Temperatur aufweist. Auf diese Weise können gleichzeitig mehrere Kulturen bei unterschiedlichen Temperaturen inkubiert werden.

Ein Umtemperieren der Kulturen während der Inkubation ist nicht vorgesehen und würde auch wegen der aus Stahl oder Glas bestehenden Kulturgefäße für beispielsweise enzymatische Reaktionen viel zu lange dauern.

Aus der US-PS-3 684 452 ist ein Gerät zur Durchführung analytischer Verfahren, insbesondere zur Veraschung von Reagenzien bekannt. Bei dem bekannten Gerät werden Teströhrchen mit Lösungen von einem Drehtisch, einem endlosen Band oder einer Transportkette gehalten und schrittweise weiter bewegt. An einer Station ist ein stationär betriebener Heizkanal vorgesehen, durch den die Teströhrchen hindurch transportiert werden. Die Teströhrchen ragen dabei von oben in den U-förmig nach oben und an den Stirnseiten offenen Heizkanal hinein, dessen Seitenwände und dessen Boden mit Heizwicklungen versehen sind.

Die Röhrchen und damit die Lösungen werden durch die von den Heizwicklungen ausgehende Strahlung erhitzt, wobei die Heizspulen so angeordnet sind, daß die Hitze zunimmt, je weiter die Röhrchen in Längsrichtung in den Kanal hinein wandern. Dem Heizkanal ist eine Wasch- und Spülstation nachgeschaltet, in der die Teströhrchen nach der Veraschung der Lösungen gereinigt werden, um sofort wieder verwendet werden zu können.

Ein zyklisches Aufheizen und Abkühlen ist mit dem bekannten Gerät nicht möglich.

Aus der DE-OS-3 303 452 ist eine Verklebungspresse zum Verkleben von flächenförmigen Textilstücken, insbesondere Futter- oder Außenstoffen bekannt. Das bekannte Gerät weist eine Heizstation mit mehreren Heizbereichen auf, deren elektrische Heizungen wahlweise ein- und ausgeschaltet werden können, um so eine räumliche und/oder zeitliche Temperaturverteilung einstellen zu können. Die Heizungen sind jeweils felexible Heizmatten, in die Heizdrähte eingebettet sind. Die Textilstücke werden an den Heizmatten vorbeigeführt und durch den Kontakt mit diesen aufgeheizt und nachträglich verklebt.

Zur Durchführung von biochemischen Methoden ist die bekannte Verklebungspresse nicht geeignet.

Ausgehend von dem genannten Stand der Technik ist es Aufgabe der vorliegenden Erfindung, ein Gerät der vorstehend genannten Art dahingehend weiterzubilden, daß die vorstehend beschriebenen Nachteile vermieden werden. Insbesondere soll es bei konstruktiv einfachem Aufbau des Gerätes möglich werden, Temperaturänderungen in zumindest einer Probe schnell, reproduzierbar und zyklisch durchführen zu können.

Diese Aufgabe wird dadurch gelöst, daß der Halter einen wärmeleitenden Probenaufnahmen-Block mit Ausnehmungen zur wärmeleitenden Aufnahme der Probe aufweist, die Temperiermittel zumindest zwei längs einer Koordinate angeordnete starre wärmeleitende Temperierblöcke umfassen, die Transporteinrichtung den Probenaufnahmen-Block entlang der Koordinate bewegt, und die Steuerung als Ablaufsteuerung dazu eingerichtet ist, den Probenaufnahme-Block mittels der Transporteinrichtung zyklisch nacheinander mit den Temperierblöcken jeweils für eine bestimmte Zeitdauer in Anlage zu bringen.

Die der Erfindung zugrundeliegende Aufgabe wird auf diese Weise vollkommen gelöst. Weil der Probenaufnahme-Block nur entlang einer Koordinate bewegt wird, was in einer geraden oder kreisbahnförmigen Richtung gescheben kann, kann er auf konstruktiv einfache Weise und vor allem sehr schnell zwischen unterschiedlich temperierten Temperaturblöcken verfahren werden. Da sowohl zwischen der Probe und dem Probenaufnahme-Block als auch zwischen dem Probenaufnahme-Block und dem jeweiligen Temperierblock wärmeleitender Kontakt besteht, nimmt die Probe außerdem die Temperatur des jeweiligen Temperierblockes sehr schnell an. Als Temperiermittel werden erfindungsgemäß starre wärmeleitende Temperaturblöcke verwendet, die einen erheblich schnelleren Wärmeaustausch ermöglichen, als die Flüssigkeiten beim Stand der Technik.

All dies trägt dazu bei, daß der Temperaturwechsel in einer Probe schnell und reproduzierbar vor sich geht. Die Ablaufsteuerung sorgt dabei für ein zyklisches Durchfahren eines Temperaturprofiles, bei dem die Probe jeweils für eine festgelegte Zeitdauer auf der Temperatur des Temperierblockes verbleibt, mit dem der Probenaufnahme-Block gerade in Anlage ist. Während des Transportes zwischen zwei Temperierblöcken finden keine unerwünschten Temperaturänderungen in der Probe mehr statt, da der Transport einerseits sehr schnell erfolgt und da andererseits die Temperierblöcke entlang der Koordinate nebeneinander angeordnet sind, so daß auch der zurückzulegende Weg sehr klein gehalten ist.

Bei dem erfindungsgemäßen Gerät kann die Wärmekapazität des die Ausnehmungen zur Aufnahme der Proben aufweisenden, gewöhnlich aus Metall wie Aluminium bestehenden Probenhalterungs- oder Probenaufnahme-Blockes relativ klein gehalten werden, so daß die Temperatur des Probenaufnahme-Blockes schnell geändert werden kann. Der Probenaufnahme-Block läßt sich durch die Transporteinrichtung wahlweise in Anlage und damit in Wärmekontakt mit einem von zwei oder mehr Temperierblöcken bringen, die durch geeignete Thermostatisiereinrichtungen auf den verschiedenen Temperaturen gehalten werden, auf die die Proben zu bringen sind. Es braucht also nur ein relativ kleiner, als Schieber ausgebildeter Probenaufnahme-Block umtemperiert zu werden, so daß ein schneller Temperaturwechsel möglich ist. Das Gerät ist hinsichtlich der Thermostatisierungsmittel geschlossen, so daß keine Probleme mit Spritz- oder Tropfwasser auftreten können.

In einer Weiterbildung des erfindungsgemäßen Gerätes sind wärmekontaktverbessernde Mittel vorgesehen, um bei in Anlage mit einem Temperierblock befindlichem Probenaufnahme-Block für eine geringe Luftschicht zwischen dem Probenaufnahme-Block und dem jeweiligen Temperierblock zu sorgen.

Diese Maßnahme ist besonders vorteilhaft, weil beispielsweise durch eine Ölschicht zwischen dem Probenaufnahme-Block und dem Temperierblock der Wärmeübergang zwischen diesen deutlich verbessert wird, während eine auch nur dünne Luftschicht den Wärmeaustausch deutlich verschlechtern würde.

Weiterhin ist es bevorzugt, wenn die wärmekontaktverbessernden Mittel zum Andrücken des Probenaufnahme-Blockes an den jeweiligen Temperierblock eingerichtet sind.

Das Andrücken des Probenaufnahme-Blockes kann beispielsweise durch Federn oder durch Ansaugen mit Unterdruck erfolgen, was in beiden Fällen zu einem guten Wärmeübergang und damit zu einem schnellen Umtemperieren des Probenaufnahme-Blockes und damit der in dem Probenaufnahme-Block aufgenommenen Proben führt.

Im folgenden wird ein bevorzugtes Ausführungsbeispiel der Erfindung unter Bezugnahme auf die Zeichnung näher erläutert, dabei werden noch weitere Merkmale und Vorteile der Erfindung zur Sprache kommen. Es zeigen:
- Fig. 1: eine vereinfachte Draufsicht auf ein Gerät gemäß einer Ausführungsform der Erfindung;
- Fig. 2: eine vereinfachte Seitenansicht des Gerätes gemäß Fig. 1 und
- Fig. 3: eine vereinfachte Stirnansicht des Gerätes gemäß Fig. 1.

Das in der Zeichnung dargestellte Gerät enthält einen gut wärmeleitenden Probenhalterungs- oder Probenaufnahme-Block 12 aus einem gut wärmeleitenden Metall, der Bohrungen oder Ausnehmungen 14 zur Aufnahme von Reaktions- oder Probengefäßen 16 aufweist. Das als Ausführungsbeispiel der Erfindung dargestellte Gerät enthält ferner drei thermostatisierbare Körper 18, 20, 22, die aus Metall bestehen können, eine im Vergleich zum Probenaufnahme-Block 12 relativ große Wärmekapazität haben und durch Thermostatisiereinrichtungen auf drei verscheidenen Temperaturen T1, T2 bzw. T3 gehalten werden können. Die Thermostatisier-Körper 18, 20, 22 sind durch wärmeisolierende Zwischenstücke 24, 26, die z. B. aus Kunststoffschaum bestehen können, thermisch gegeneinander isoliert.

Die Oberseite der Thermostatisier-Körper 18, 20, 22 bildet eine im vorliegenden Falle schwalbenschwanzförmige Nut 28, in der der entsprechend geformte Probenaufnahme-Block 12 verschiebbar gelagert ist. Die Verschiebung erfolgt durch einen Zahnriemen 30, der über Umlenkrollen 32 geführt ist, von denen eine durch einen Motor 34, z. B. einen in der Drehrichtung umsteuerbaren Schrittmotor, verbunden ist.

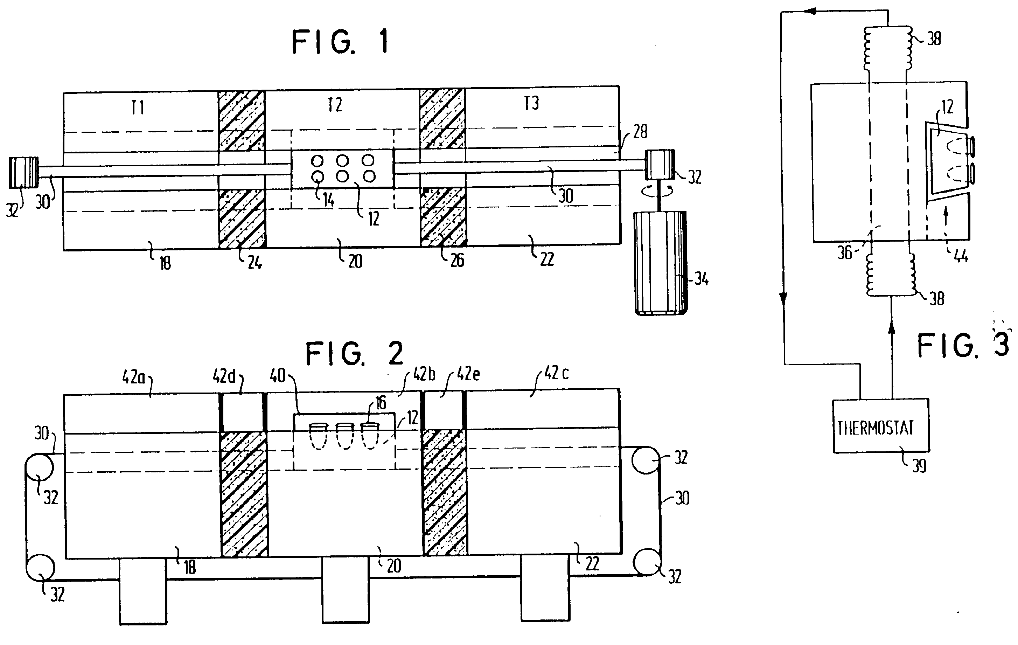

Wie Fig. 3 zeigt, können die Thermostatisier-Körper 18, 20, 22 einen Kanal 36 zum Hindurchleiten eines Wärmeträgers enthalten, der Anschlüsse (Oliven) 38 für einen Wärmeträgerkreislauf eines Thermostaten 39 aufweist. Der Kanal kann sich im Thermostatisier-Körper verzweigen und/oder Schikanen enthalten oder anderweitig durch geeignete Formgebung so ausgebildet sein, daß sich eine turbulente Strömung des Wärmeträgers ergibt und dadurch ein optimaler Wärmeübergang gewährleistet ist. Jeder Thermostatisier-Körper 18, 20, 22 ist mit einem eigenen Thermostaten verbunden, so daß er auf eine individuelle Temperatur einstellbar ist. Zur Einstellung der Temperatur der Thermostatisier-Körper 18, 20, 22 können selbstverständlich auch andere bekannte Einrichtungen, wie Heizpatronen, Peltierelemente und dergleichen verwendet werden. Die Thermostatisier-Körper 18, 20, 22 werden zumindest während einer Versuchsreihe auf der gleichen, konstanten Temperatur gehalten, so daß eine hohe Genauigkeit und Reproduzierbarkeit des Temperaturverlaufes gewährleistet ist.

Im Betrieb wird der Probenaufnahme-Block 12 mittels des Motors 34 und des Zahnriemens 30 in wärmeleitenden Kontakt mit demjenigen Thermostatisier-Körper 18, 20, 22 gebracht, dessen Temperatur gleich der gewünschten Probentemperatur ist. Wenn die Temperatur der Proben geändert werden soll, wird der Probenaufnahme-Block 12 längs der Nut 28 in einen anderen Thermostatisier-Körper, der die gewünschte neue Temperatur hat, geschoben. Die Genauigkeit und Reproduzierbarkeit der Temperatureinstellung kann dadurch noch verbessert werden, daß der Probenaufnahme-Block 12 und/oder jeder Thermostatisier-Körper 18, 20, 22 mit einem Deckel 40 bzw. 42a, 42b und 42c versehen sind, um eine gute thermische Isolierung zu gewährleisten. Auch die wärmeisolierenden Zwischenstücke 24, 26 sind jeweils mit einem Deckel 42d bzw. 42e abgedeckt. Die aneinander angrenzenden Stirnwände der Deckel sind vorzugsweise mit Ausschnitten (nicht dargestellt) versehen, die ein Hindurchtreten des Blockes 12 mit den Proben und ggf. dem Deckel 40 gestatten und durch Schieber verschließbar sein können. Die Ablaufsteuerung kann von Hand, über einen Computer oder durch irgendeine andere geeignete Steuerschaltung erfolgen.

Der Wärmekontakt zwischen dem als Schieber arbeitenden Probenaufnahme-Block 12 und den thermostatisierbaren Grundblöcken oder Thermostatisier-Körpern 18, 20, 22 kann durch Andruckfedern, Schmiermittel (Öl, Wasser), nicht mit thermostatisierte Zusatzgewichte oder durch Ansaugen des Schiebers mittels Unterdruck an die Thermostatisier-Körper 18, 20, 22 noch verbessert werden. Z. B. kann ein Teil 44 der Thermostatisier-Körper, der seitlich an die Nut 28 angrenzt, am Hauptteil des betreffenden Thermostatisierkörpers verschiebbar gelagert und durch irgendwelche geeignete Mittel z. B. Federn, seitlich gegen den Probenaufnahme-Block gedrückt wird, wie in Fig. 3 schematisch dargestellt ist.

Da die Temperatureinstellung vom Probenaufnahme-Block 12 unabhängig ist, kann der Probenaufnahme-Block leicht ausgetauscht werden. Dadurch ist das Gerät schnell auf unterschiedliche Probenarten umrüstbar, z. B. auf Kunststoff-Reaktionsgefäße verschiedener Form und auch auf Folien, die ähnlich wie Microtiterplatten mehrere Reaktionsgefäße tragen.

Wenn nur zwei unterschiedliche Temperaturen gebraucht werden, kann einer den Thermostatisier-Körper 18, 20, 22 entfallen. Andererseits kann das Gerät durch zusätzliche Thermostatisier-Körper auf beliebig viele Temperaturen erweitert werden. Dabei können höhere und/oder tiefere Temperaturen als erforderlich vorgesehen werden, denen der Probenaufnahme-Block 12 kurzzeitig ausgesetzt wird, um einen schnelleren Temperaturwechsel zu erzielen. Soll z. B. ein 90°C heißer Probenaufnahme-Block auf 30°C abgekühlt werden, so kann er zunächst in einem auf 10°C gehaltenen Thermostatisierkörper schnell bis auf etwa 30°C abkühlt und dann in den auf 30°C gehaltenen Thermostatisier-Körper gefahren werden.

Die Notwendigkeit für jeden thermostatisierbaren Körper eine eigene Thermostatisierung vorzusehen, kann gemäß einer Weiterbildung der Erfindung vermieden werden, indem die isolierenden Schichten 24, 26 usw. zwischen den benachbarten Thermostatisier-Körpern so bemessen werden, daß sie eine gewisse, ausreichende Wärmeleitfähigkeit haben, so daß nur die äußeren Thermostatisier-Körper thermostatisiert zu werden brauchen und der oder die dazwischen liegenden Thermostatisier-Körper durch Wärmeleitung durch die isolierenden Zwischenschichten auf entsprechenden Zwischentemperaturen gehalten werden. Hierbei soll jedoch die Wärmeleitfähigkeit der indirekt thermostatisierten Körper mindestens eine Zehnerpotenz größer sein als die Wärmeleitfähigkeit der Zwischenschichten, damit eine im wesentlichen gleichmäßige Temperatur der Thermostatisier-Körper gewährleistet ist.

Anstatt einer Nut 28 können auch mehrere, zweckmäßigerweise parallele Nuten vorgesehen sein, in denen weitere, synchron oder unabhängig verschiebbare Probenaufnahme-Blöcke entsprechend dem Probenaufnahme-Block 12 verschiebbar sind, so daß mehrere Programme gleichzeitig gefahren werden können. Das Gerät kann auch kreissymmetrisch ausgebildet sein, wobei der Probenaufnahme-Block dann in einer kreisförmigen Nut verschiebbar ist.

Die Nut (und dementsprechend auch der Probenaufnahme-Block) kann auch einen andere Querschnittsform haben. Sie kann z. B. rechteckig sein oder eine andere, den Probenaufnahme-Block formschlüssig umgreifende Konfiguration, wie T-förmig, aufweisen.

## Patentansprüche

1. Gerät zum Einstellen der Temperatur zumindest einer Probe auf verschiedene Werte, mit einem Halter (12) zur Aufnahme der Probe, mit auf zumindest zwei unterschiedliche Temperaturen thermostatisierten Temperiermitteln (18, 20, 22), mit einer Transporteinrichtung (30, 32, 34) für den Halter und mit einer Steuerung für die Transporteinrichtung (30, 32, 34), wobei die Probe mit den Temperiermitteln (18, 20, 22) wahlweise in wärmeleitenden Kontakt bringbar ist, dadurch gekennzeichnet, daß der Halter einen wärmeleitenden Probenaufnahme-Block (12) mit Ausnehmungen (14) zur wärmeleitenden Aufnahme der Probe aufweist, die Temperiermittel zumindest zwei längs einer Koordinate angeordnete starre wärmeleitende Temperierblöcke (18, 20, 22) umfassen, die Transporteinrichtung (30, 32, 34) den Probenaufnahme-Block (12) entlang der Koordinate bewegt, und die Steuerung als Ablaufsteuerung dazu eingerichtet ist, den Probenaufnahme-Block (12) mittels der Transporteinrichtung (30, 32, 34) zyklisch nacheinander mit den Temperierblöcken (18, 20, 22) jeweils für eine bestimmte Zeitdauer in Anlage zu bringen.

2. Gerät nach Anspruch 1, dadurch gekennzeichnet, daß Mittel vorgesehen sind, die für einen verbesserten Wärmekontakt zwischen dem Probeaufnahmen-Block (12) und dem jeweiligen Temperierblock (18, 20, 22) sorgen.

3. Gerät nach Anspruch 2, dadurch gekennzeichnet, daß die Mittel zum Andrücken des Probenaufnahme-Blockes (12) an den jeweiligen Temperierblock (18, 20, 22) eingerichtet sind.

4. Gerät nach einem der vorstehenden Ansprüche, dadurch gekennzeichnet, daß die Temperierblöcke (18, 20, 22) durch eine Wärmeisolation (24, 26) gegeneinander thermisch isoliert sind.

5. Gerät nach einem der vorstehenden Ansprüche, dadurch gekennzeichnet, daß die Temperierblöcke (18, 20, 22) mit zumindest einer Nut (28) versehen sind, in der der Probenaufnahme-Block (12) verschiebbar gelagert ist.

6. Gerät nach Anspruch 5, dadurch gekennzeichnet, daß die Nut (28) den Probenaufnahme-Block (12) formschlüssig umgreift.

7. Gerät nach den Ansprüchen 5 oder 6, dadurch gekennzeichnet, daß die Nut (28) gerade ist und die Transporteinrichtung (30, 32, 34) ein mit dem Probenaufnahme-Block (12) verbundenes bandförmiges Element (30) enthält, das mit einer Antriebsvorrichtung (34) gekoppelt ist.

8. Gerät nach einem der vorstehenden Ansprüche, dadurch gekennzeichnet, daß jeder Temperierblock (18, 20, 22) mit einem eigenen Thermostaten verbunden ist.

9. Gerät nach einem der Ansprüche 1 bis 7, dadurch gekennzeichnet, daß mindestens drei in einer Reihe angeordnete Temperierblöcke (18, 20, 22) vorgesehen sind, daß zwischen benachbarten Temperierblöcken (18, 20, 22) eine Wärmeisolation (24, 26), die eine nennenswerte Wärmeleitfähigkeit aufweist, angeordnet ist, daß die Temperier-Blöcke (18, 22) an den Enden der Reihe jeweils mit einer Thermostatisiereinrichtung verbunden sind, und daß die Wärmeisolation (24, 26) zwischen benachbarten Körpern eine Wärmeleitfähigkeit hat, die mindestens um eine Zehnerpotenz geringer ist als die Wärmeleitfähigkeit der Temperier-Blöcke (18, 20, 22), so daß der dazwischenliegende Temperierblock (20) oder die dazwischenliegenden Temperierblöcke durch Wärmeleitung jeweils auf einer Temperatur gehalten wird (werden), die zwischen den Temperaturen der an den Enden angeordneten Temperierblöcken liegt.

10. Gerät nach einem der vorhergehenden Ansprüche, dadurch gekennzeichnet, daß jeder Temperierblock (18, 20, 22) mit einer eigenen Abdeckung (42a, 42b, 42c) versehen ist.

## Claims

1. Device for setting the temperature of at least one sample to different values, the device comprising a holder (12) intended to receive the sample, temperature-adjusting means (18,20,22) which are thermostatted to at least two different temperatures, transport means (30,32,34) for the holder and a control for the transport means (30,32,34), the arrangement being such that the sample can be brought into thermal contact selectively with any of the temperature-adjusting means (18,20,22), characterized in that the holder comprises a thermally conductive sample holder block (12) provided with recesses (14) intended to receive the sample in thermally conductive relationship, the temperature-changing means comprise at least two rigid thermally conductive temperature blocks (18,20,22) arranged along one coordinate, the transport means (30,32,34) moves the sample holder block (12) along said coordinate, and that the control is a sequence control system and as such adapted to bring the sample holder block (12) cyclically and sequentially into contact with the temperature blocks (18,20,22), for given periods of time, using the transport means (30,32,34).

2. Device according to claim 1, characterized in that means are provided for improving the thermal contact between the sample holder block (12) and the respective temperature block (18,20.22).

3. Device according to claim 1, characterized in that the means are adapted to press the sample holder block (12) against the respective temperature block (18,20,22).

4. Device according to any of the preceding claims, characterized in that the temperature blocks (18,20,22) are thermally insulated from each other by a thermal insulation (24,26).

5. Device according to any of the preceding claims, characterized in that the temperature blocks (18,20,22) are provided with at least one groove (28) in which the sample holder block (12) is supported in sliding relationship.

6. Device according to claim 5, characterized in that the groove (28) encloses the sample holder block (12) in form-locking engagement.

7. Device according to claims 5 or 6, characterized in that the groove (28) is straight and that the transport means (30,32,34) comprises a belt-like element (30) which is connected to the sample holder block (12) and coupled to a drive means (34).

8. Device according to any of the preceding claims, characterized in that each temperature block (18,20,22) is connected to a thermostat of its own.

9. Device according to any of claims 1 to 7, characterized in that at least three temperature blocks (18,20,22) are provided in a row, a thermal insulation having a notable thermal conductivity is arranged between neighboring temperatue blocks, each of the temperature blocks (18,22), which is at least one power of ten less than the thermal conductivity of the temperature blocks (18,20,22) is connected to a thermostatting means, and the thermal insulation (24,26) between neighboring temperature blocks has a thermal conductivity at the ends of the row such that due to the heat transfer the temperature block (20) or the temperature blocks arranged therebetween is (are) maintained at a temperature between the temperature of the temperature blocks arranged at the ends.

10. Device according to any of the preceding claims, characterized in that each temperature block (18,20,22) is provided with a cover (42a,42b,42c) of its own.

## Revendications

1. Dispositif pour le réglage de la température d'au moins un échantillon, sur différentes valeurs, comportant un support (12) destiné à recevoir l'échantillon, comportant des moyens de mise à température (18, 20, 22) thermostatiques avec au moins deux températures différentes, comportant un dispositif de transport (30, 32, 34) pour le support et comportant une commande pour le dispositif de transport (30, 32, 34), l'échantillon pouvant être amené au choix en contact conducteur de chaleur avec les moyens de mise à température (18, 20, 22), caractérisé en ce que le support comporte un bloc (12) de réception d'échantillon, conducteur de chaleur, présentant des évidements (14) destinés à recevoir, d'une manière conduisant la chaleur, l'échantillon, les moyens de mise à température comportant au moins deux blocs de mise à température (18, 20, 22), conducteurs de chaleur, fixes, placés le long d'une coordonnée, le dispositif de transport (30, 32, 34) déplace le bloc de réception d'échantillon (12) le long de la coordonnée et la commande, servant de commande de processus, est équipée pour amener cycliquement le bloc de réception d'échantillon (12), au moyen du dispositif de transport (30, 32, 34), en application avec les blocs de mise à température (18, 20, 22), l'un après l'autre, dans chaque cas pour une durée déterminée.

2. Dispositif selon la revendication 1, caractérisé en ce qu'il est prévu des moyens qui assurent un meilleur contact thermique entre le bloc de réception d'échantillon (12) et le bloc de mise à température (18, 20, 22) concerné.

3. Dispositif selon la revendication 2, caractérisé en ce que les moyens sont prévus pour presser le bloc de réception d'échantillon (12) contre le bloc de mise à température (18, 20, 22) concerné.

4. Dispositif selon l'une des revendications précédentes, caractérisé en ce que les blocs de mise à température (18, 20, 22) sont isolés thermiquement l'un par rapport à l'autre par une isolation thermique (24, 26).

5. Dispositif selon l'une des revendications précédentes, caractérisé en ce que les blocs de mise à température (18, 20, 22) sont pourvus d'au moins une rainure (28) dans laquelle le bloc de réception d'échantillon (12) est monté coulissant.

6. Dispositif selon la revendication 5, caractérisé en ce que la rainure (28) entoure par concordance de forme le bloc de réception d'échantillon (12).

7. Dispositif selon les revendications 5 ou 6, caractérisé en ce que la rainure (28) est rectiligne et le dispositif de transport (30, 32, 34) comporte un élément (30) en forme de bande, relié au bloc de réception d'échantillon (12), lequel élément est couplé avec un dispositif d'entraînement (34).

8. Dispositif selon l'une des revendications précédentes, caractérisé en ce que chaque bloc de mise à température (18, 20, 22) est relié à son propre thermostat.

9. Dispositif selon l'une des revendications 1 à 7, caractérisé en ce qu'au moins trois blocs de mise à température (18, 20, 22), montés en rangée, sont prévus, en ce qu'entre des blocs de mise à température (18, 20, 22) voisins il est prévu une isolation thermique (24, 26) qui présente une conductibilité thermique notable, en ce que les blocs de mise à température (18, 22) sont reliés chacun, aux extrémités de la rangée, à un dispositif thermostatique et en ce que l'isolation thermique (24, 26) entre les corps voisins a une conductibilité thermique qui est inférieure d'au moins une puissance dix à la conductibilité thermique des blocs de mise à température (18, 20, 22), ce qui fait que le bloc de mise à température (20) intermédiaire ou les blocs de mise à température intermédiaires est(sont) maintenu(s) chacun par conduction thermique, à une température qui se situe entre les températures des blocs de mise à température situés aux extrémités.

10. Dispositif selon l'une des revendications précédentes, caractérisé en ce que chaque bloc de mise à température (18, 20, 22) est pourvu de son propre couvercle (42a, 42b, 42c).
